# EUROPÄISCHE PATENTSCHRIFT

(11) **EP 0 554 663 B1**
(45) Veröffentlichungstag und Bekanntmachung des Hinweises auf die Patenterteilung: **01.05.1996**
(21) Anmeldenummer: 93100167.1
(22) Anmeldetag: 08.01.1993
(51) Int. Cl.: B60Q 1/115

(54) **Verfahren zur Regelung der Leuchtweite von Kraftfahrzeugen und Leuchtweitenregler**
Method and device for controlling the light beam of a vehicle
Procédé et dispositif de réglage de la portée des phares d'un véhicule

(30) Priorität: 01.02.1992 DE 4202908
(43) Veröffentlichungstag der Anmeldung: 11.08.1993
(73) Patentinhaber: Hella KG Hueck & Co., D-59552 Lippstadt (DE)
(72) Erfinder: Hussmann, Micha, W-4780 Lippstadt (DE); Kasprzok, Ralf, W-4780 Lippstadt (DE)

(56) Entgegenhaltungen:
- EP-A- 0 355 539

## Beschreibung

Die Erfindung betrifft ein Verfahren zur Regelung der Leuchtweite von Kraftfahrzeugen, bei dem Signale gemessen werden, die von der relativen Stellung der Fahrzeugkarosserie zu der Straße abhängen, bei dem Sollwertsignale aus diesen Signalen gebildet werden, die Sollwertsignale durch eine Mittelwertbildung gefiltert werden und bei dem Stelleinrichtungen in Abhängigkeit von den gefilterten Sollwertsignalen in ihrer Lage geregelt werden und einen Leuchtweitenregler für Kraftfahrzeuge mit den Merkmalen des Oberbegriffs des Anspruchs 1.

Aus der europäischen Patentanmeldung mit der Veröffentlichungsnummer EP-A-0 355 539 ist ein Verfahren zur Regelung der Leuchtweite von Kraftfahrzeugen bekannt, bei dem an mindestens einer Stelle einer Radachse Signale gemessen werden, die von der relativen Stellung der Fahrzeugkarosserie zu der Radachse und damit zu der Straße abhängen. Aus diesen Signalen werden Sollwertsignale gebildet, die durch eine Mittelwertbildung gefiltert werden. Die Mittelsertbildungszeiten sind dabei von der Beschleunigung des Kraftfahrzeuges abhängig. Aufgrund der gefilterten Sollwerte werden Stelleinrichtungen zur Regelung der Leuchtweite in ihrer Lage geregelt. Zudem ist aus der europäischen Patentanmeldung EP-A-0 355 539 ein Leuchtweitenregler für Kraftfahrzeuge bekannt, der die Merkmale des Oberbegriffs des Anspruchs 1 aufweist.

Bei dem bekannten Leuchtweitenregler erweist sich als nachteilig, daß Schwingungen der Fahrzeugkarosserie, die sich in eine Leuchtweitenänderung umsetzen, die z. B. durch ein starkes Bremsen oder ein starkes Beschleunigen bedingt sind, bei der Verwendung von Stelleinrichtungen mit geringer Stellgeschwindigkeit nicht ausgeregelt werden können, so daß Fehleinstellungen der Leuchtweite erzeugt werden, die sich entweder in einem Sichtweiteverlust für den Fahrer darstellen oder den Gegenverkehr blenden, wodurch gefährliche Situationen erzeugt werden können. Dies gilt insbesondere, wenn das Fahrzeug mit hohen Geschwindigkeiten bewegt wird. Wird das Fahrzeug mit niedrigen Geschwindigkeiten bewegt, erweist sich als nachteilig, daß die Regelung der Leuchtweite nicht schnell genug ist und somit auch Blendungen erseugt werden können.

Der Erfindung liegt die Aufgabe zugrunde, eine Leuchtweitenregelung für Kraftfahrzeuge zu schaffen, die einfach und kostengünstig ist und bei der Fehleinstellungen aufgrund von Beschleunigungsvorgängen vermieden werden.

Die Aufgabe wird erfindungsgemäß durch die Merkmale der Ansprüche 1 und 6 gelöst.

Es ist von Vorteil, daß die Mittelwertbildung eine veränderliche Mittelwertbildungszeit aufweist, die nach Aktivierung der Mittelwertbildung schrittweise oder kontinuierlich bis auf eine maximale Mittelwertbildungszeit verlängert wird, weil somit gewährleistet wird, daß bei Inbetriebnahme des Kraftfahrzeugs eine schnelle Regelung der Leuchtweite erfolgt. Auf diese Weise wird gewährleistet, daß Beladungsänderungen ausgeregelt werden, nicht jedoch Änderungen in der Lage der Fahrzeugkarosserie zu den Radachsen, die durch kurzzeitige dynamische Fahrprozesse bedingt sind.

In diesem Zusammenhang erweist sich als vorteilhaft, daß die Mittelwertbildung unterbrochen wird, wenn eine Mindestgeschwindigkeit überschritten wird und gleichzeitig ein vorgegebener Beschleunigungswert überschritten wurde, wodurch sichergestellt wird, daß fahrdynamische Vorgänge wie starkes Bremsen oder starkes Beschleunigen nicht die Mittelwertbildung beeinflussen und somit direkt nach Beendigung dieser fahrdynamischen Vorgänge keine Fehleinstellung der Leuchtweite vorliegen kann, die zu gefährlichen Situationen führen könnte.

In diesem Zusammenhang ist es zudem vorteilhaft, daß die Mittelwertbildung wieder aktiviert wird, wenn der vorgegebene Beschleunigungswert oder die Mindestgeschwindigkeit unterschritten wird, so daß Veränderungen der Lage der Fahrzeugkarosserie ausgeregelt werden können.

Es ist von Vorteil, daß bei ausgeschaltetem Licht des Kraftfahrzeugs der letzte gefilterte Sollwert zur Ansteuerung der mindestens einen Stelleinrichtung verwendet wird, so daß bei Wiederinbetriebnahme der Lichtanlage eine Einstellung der Leuchtweite vorliegt, die zu keinen Blendungen und Sichtweiteverlusten führt.

Vorteilhaft ist es, daß die Mittelwertbildungszeit bei stehendem Fahrzeug und einer durch eine Beladungsänderung bedingten Lageänderung auf eine Startmittelwertbildungszeit zurückgesetzt wird, weil somit sichergestellt wird, daß die Lageänderung auf Grund der Beladung des Fahrzeugs möglichst schnell ausgeregelt wird. Eine Beladungsänderung ist dabei gegeben, wenn ein Sollwertsprung bestimmter Größe über eine vorgegebene Zeit vorliegt.

Entsprechend dem kennzeichnenden Teil des Anspruchs 1 ist es vorteilhaft, wenn der Beschleungigungssignalbildner mit einem ersten Schwellwertgeber verbunden ist, der bei überschreiten und Unterschreiten eines vorgegebenen Beschleunigungswertes Signale erzeugt, daß der erste Schwellwertgeber mit dem Filter, einer ersten Schalteinrichtung in der Verbindung zwischen dem Sollwertgeber und dem Filter und mit einer zweiten Schalteinrichtung in Verbindung zwischen dem Filter und der Stelleinrichtung verbunden ist, daß das Signal von dem ersten Schwellwertschalter bei überschreiten des vorgegebenen Beschleunigungswertes die erste und die zweite Schalteinrichtung in den geöffneten Zustand schaltet und die Mittelwertbildung durch den Filter unterbricht, daß das Signal von dem ersten Schwellwertgeber bei Unterschreiten des vorgegebenen Beschleunigungswertes die erste und die zweite Schalteinrichtung in den geschlossenen Zustand schaltet und die Mittelwertbildung durch den Filter einschaltet, weil somit auf einfache und kostengünstige Weise erreicht wird, daß bei Beschleunigungen, die kleiner als der vorgegebene Beschleunigungswert sind, die Mittelwertbildung aktiviert ist und die wesentlichen Veränderungen in der Lage der Fahrzeugkarosserie zu der Straße bezüglich der Leuchtweitenregelung ausgeregelt werden können und bei dem Auftreten von hohen Beschleunigungen oberhalb des vorgegebenen Beschleunigungswertes zum einen keine Sollwerte mehr dem Filter zur Verfügung gestellt werden und der Filter keine gefilterten Sollwerte mehr an die mindestens eine Stelleinrichtung weitergeben kann, wodurch sichergestellt wird, daß bei starken positiven oder negativen Beschleunigungen des Kraftfahrzeugs, die zu Schwingungen der Fahrzeugkarosserie führen, die nicht durch den Leuchtweiteregler ausgeregelt werden können, zuverlässig Fehleinstellungen der Leuchtweite vermieden werden, da neue gefilterte Sollwerte der mindestens einen Stelleinrichtung erst dann wieder zur Verfügung gestellt werden, wenn keine großen Beschleunigungswerte mehr vorliegen.

Dadurch, daß der Geschwindigkeitssignalbildner mit einem zweiten Schwellwertgeber verbunden ist, der bei überschreiten und Unterschreiten einer Mindestgeschwindigkeit Signale erzeugt, daß der zweite Schwellwertgeber mit einer dritten Schalteinrichtung in der Verbindung zwischen dem Beschleunigungssignalgeber und dem ersten Schwellwertgeber verbunden ist, daß bei überschreiten der Mindestgeschwindigkeit die dritte Schalteinrichtung durch das Signal von dem zweiten Schwellwertgeber in den geschlossenen Zustand geschaltet wird, daß das Signal von dem zweiten Schwellwertgeber bei Unterschreiten der Mindestgeschwindigkeit die dritte Schalteinrichtung in den geöffneten Zustand schaltet und die Mittelwertbildung durch den Filter fortgesetzt oder eingeschaltet wird, ergibt sich der Vorteil, daß bei geringen Geschwindigkeiten des Kraftfahrzeuges, die unterhalb der Mindestgeschwindigkeit liegen, immer eine Mittelwertbildung durchgeführt wird und somit die wesentlichen Lageänderungen der Fahrzeugkarosserie in Bezug auf die Leuchtweitenregelung ausgeregelt werden können und daß bei Geschwindigkeiten größer und gleich der Mindestgeschwindigkeit die Aktivierung und Unterbrechung der Mittelwertbildung in Abhängigkeit von der Beschleunigung des Kraftfahrzeugs, wie oben beschrieben, erfolgt.

Es ist von Vorteil, daß in der Verbindung zwischen der zweiten Schalteinrichtung und der mindestens einen Stelleinrichtung ein Speicher angeordnet ist, wodurch sichergestellt wird, daß der letzte gefilterte Sollwert der mindestens einen Stelleinrichtung jederzeit als Regelwert zur Verfügung steht.

Dadurch, daß ein Lichtsignalgeber mit der zweiten Schalteinrichtung verbunden ist, der ein Signal erzeugt, das bei ausgeschaltetem Licht des Kraftfahrzeugs die zweite Schalteinrichtung in den geöffneten Zustand schaltet und das bei eingeschaltetem Licht die zweite Schalteinrichtung in den geschlossenen Zustand schaltet, ergibt sich der Vorteil, daß eine Einstellung und Regelung der Leuchtweite nur vorgenommen wird, wenn das Licht an dem Kraftfahrzeug auch eingeschaltet ist, wodurch die Lebensdauer insbesondere der Stelleinrichtungen erhöht werden kann.

Hierbei erweist sich als besonders vorteilhaft, daß das Signal von dem Lichtsignalgeber zur Umschaltung der zweiten Schalteinrichtung das Signal von dem ersten Schwellwertgeber überschreibt.

Es ist von Vorteil, daß nach Aktivierung der Mittelwertbildung des Filters durch die Signale von dem ersten Schwellwertgeber die Mittelwertbildungszeit schrittweise oder kontinuierlich auf eine maximale Mittelwertbildungszeit erhöht wird, weil somit sichergestellt wird, daß bei Fahrgeschwindigkeiten oberhalb der Mindestgeschwindigkeit ohne längere Unterbrechung und ohne dynamische Vorgänge, das heißt, positive und negative Beschleunigungen, bei dem der vorgegebene Beschleunigungswert überschritten wird, eine "starre" Regelung der Leuchtweite erreicht wird, durch die Fehleinstellungen der Leuchtweite vermieden werden.

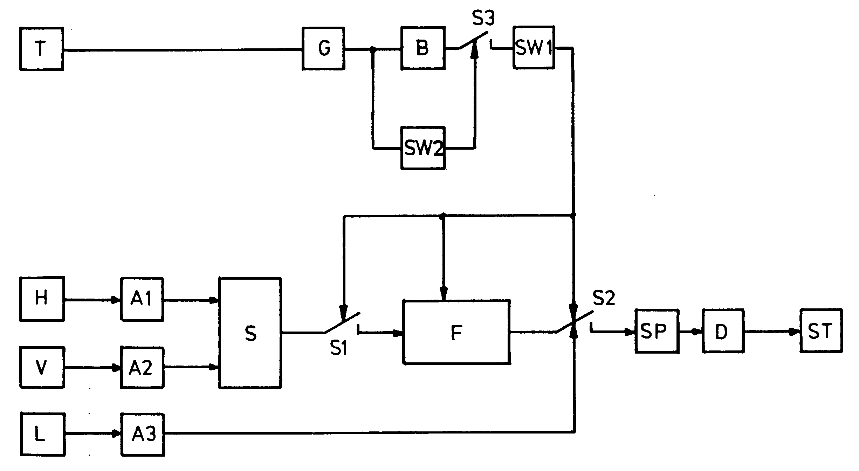

Ein Ausführungsbeispiel eines Leuchtweitenreglers ist in der einzigen Zeichnung dargestellt und wird im folgenden anhand der Zeichnung näher beschrieben.

Die einzige Figur zeigt ein Blockschaltbild eines erfindungsgemäßen Leuchtweitenreglers.

Bei dem hier gezeigten Ausführungsbeispiel verfügt das Fahrzeug als Lagegeber (H, V) über einen Hinterachsgeber (H) und einen Vorderachsgeber (V), die Ausgangssignale in Abhängigkeit von der Lage der Fahrzeugkarosserie zu der Vorderachse und der Hinterachse und damit zu der Straße bilden. Diese Ausgangssignale werden über einen ersten Analog/Digital-Wandler (A1) und einen zweiten Analog/Digital-Wandler (A2) einem Sollwertbildner (S) zugeführt, der Sollwerte in Abhängigkeit der Ausgangssignale der Lagegeber (V, H) bildet.

Bei einem anderen Ausführungsbeispiel kann es z. B. ausreichend sein, wenn allein ein Hinterachsgeber (H) zwischen der Hinterachse des Kraftfahrzeugs und der Kraftfahrzeugkarosserie angeordnet wird, um Sollwerte zu bilden, die eine Regelung der Leuchtweite ermöglichen.

Es können auch Lagegeber (H, V) Verwendung finden, die optisch, kapazitiv oder durch Ultraschallmessung Lagesignale bilden.

Der Sollwertbildner (S) ist über eine erste Schalteinrichtung mit einem Filter (F) verbunden. Der Filter (F) führt eine Mittelwertbildung der Sollwerte von dem Sollwertbildner (S) durch. Bei dem hier beschriebenen Ausführungsbeispiel weist der Filter (F) veränderliche Mittelwertbildungszeiten auf, die nach Aktivierung der Mittelwertbildung von einer Startmittelwertbildungszeit oder einer aktuellen Mittelwertbildungszeit schrittweise bis zu einer maximalen Mittelwertbildungszeit verlängert werden, solange keine Unterbrechung der Mittelwertbildung erfolgt. Der Filter (F) ist über eine zweite Schalteinrichtung (S2), einem Speicher (SP) zur Abspeicherung des jeweils letzten gefilterten Sollwerts und einem Digital/Analog-Wandler (D), mit mindestens einer Stelleinrichtung (ST) verbunden, die aufgrund der gefilterten Sollwerte die Leuchtweite von Scheinwerfern regelt.

Damit Veränderungen der Leuchtweite nur vorgenommen werden, wenn das Licht an dem Kraftfahrzeug eingeschaltet ist, wird die zweite Schalteinrichtung (S2) von einem Lichtsignalgeber (L) angesteuert, der über einen dritten Analog/Digital-Wandler (A3) mit der zweiten Schalteinrichtung (S2) verbunden ist . Ist das Licht an dem Kraftfahrzeug eingeschaltet, so wird die zweite Schalteinrichtung in den geschlossenen Zustand geschaltet und wird das Licht an dem Kraftfahrzeug ausgeschaltet, so wird die zweite Schalteinrichtung (S2) in den geöffneten Zustand geschaltet.

Damit die Regelung der Leuchtweite in Abhängigkeit von der Geschwindigkeit und der Beschleunigung des Kraftfahrzeugs geregelt werden kann und insbesondere sichergestellt werden kann, daß Fehleinstellungen aufgrund von Beschleunigungsvorgängen vermieden werden, ist der Leuchtweitenregler mit einem Tachogenerator (T) verbunden. Der Tachogenerator (T) ist mit einem Geschwindigkeitssignalbildner (G) verbunden, der aus dem Signal von dem Tachogenerator (T) Geschwindigkeitssignale bildet. Der Geschwindigkeitssignalbildner (G) ist mit einem Beschleunigungssignalbildner (B) verbunden, der Beschleunigungssingale des Kraftfahrzeugs erzeugt. Der Beschleunigungssignalbildner (B) ist dabei über eine dritte Schalteinrichtung (S3) und einen ersten Schwellwertgeber (SW1) sowohl mit der ersten und zweiten Schalteinrichtung (S1, S2) als auch mit dem Filter (F) zur Ansteuerung dieser verbunden. Der Geschwindigkeitssignalbildner (G) ist mit einem zweiten Schwellwertgeber (SW2) verbunden, der die dritte Schalteinrichtung (S3) ansteuert.

Wesentliche Teile der in dem Blockschaltbild gezeigten Einrichtungen können in einem Mikroprozessor zusammengefaßt sein. Dazu gehören die Analog/Digital-Wandler (A1, A2, A3), der Digital/Analog-Wandler (D), der Sollwertbildner (S), der Filter (F), die Schwellwertgeber (SW1, SW2), die Schalteinrichtungen (S1, S2, S3), der Speicher (SP), der Geschwindigkeitssignalbildner (G) und der Beschleunigungssignalbildner (B).

Im folgenden wird anhand der Zeichnung das Verfahren und die Funktion des Leuchtweitenreglers beschrieben.

Nach der Initialisierung des Leuchtweitenreglers, die damit beginnt, daß erkannt wird, daß die Zündung des Kraftfahrzeugs eingeschaltet wurde und ein erster aktueller Sollwert ermittelt wurde, wird ermittelt, ob das Fahrzeug steht oder fährt. Wird aufgrund des Geschwindigkeitssignals ermittelt, daß das Fahrzeug fährt, erfolgt über den zweiten Schwellwertgeber (SW2) eine Fallunterscheidung, bei der ermittelt wird, ob die Geschwindigkeit des Kraftfahrzeuges kleiner oder größer gleich der Mindestgeschwindigkeit ist. Die Mindestgeschwindigkeit beträgt bei dem hier gewählten Ausführungsbeispiel beispielhaft etwa 20 km/h. Bei anderen Ausführungsbeispielen kann die Mindestgeschwindigkeit auch größer oder kleiner gewählt werden.

Ist die Geschwindigkeit kleiner als 20 km/h wird die dritte Schalteinrichtung (S3) in den geöffneten Zustand geschaltet und die Mittelwertbildung fortgesetzt.

Ist die Geschwindigkeit größer gleich der Mindestgeschwindigkeit, so erzeugt der zweite Schwellwertgeber (SW2) ein Signal, daß die dritte Schalteinrichtung (S3) in den geschlossenen Zustand überführt. Hierdurch wird ermöglicht, daß die Einschaltung der Mittelwertberechnung durch den Filter (F) aufgrund der Beschleunigungen des Kraftfahrzeuges erfolgen kann.

Liegt eine Beschleunigung vor, die größer gleich einem vorgegebenen Beschleunigungswert ist, so werden die erste und zweite Schalteinrichtung (S1, S2) geöffnet und der letzte gefilterte Sollwert, der bestimmt wurde, bevor die Beschleunigung größer gleich der vorgegebenen Beschleunigung war, wird von dem Speicher (SP) gespeichert und an die mindestens eine Stelleinrichtung (ST) zur Regelung der Leuchtweite weitergeleitet.

Ist die Beschleunigung kleiner als der vorgegebene Beschleunigungswert, so erzeugt der erste Schwellwertgeber (SW1) ein Signal, das die erste und zweite Schalteinrichtung (S1, S2) in den geschlossenen Zustand schaltet. Gleichzeitig wird dem Filter (F) ein Signal zugeführt, so daß dieser die Mittelwertbildung z. B. nach einer Unterbrechung der Mittelwertbildung fortsetzt.

Die vorgegebene Beschleunigung beträgt bei dem hier gewählten Ausführungsbeispiel beispielhaft etwa 1,5 m/s/s. Bei anderen Ausführungsbeispielen kann die vorgegebene Beschleunigung auch größer oder kleiner gewählt werden.

Ist die Geschwindigkeit des Kraftfahrzeugs größer gleich der Mindestgeschwindigkeit und ist die Beschleunigung kleiner der vorgegebenen Beschleunigung, so wird die Mittelwertbildungszeit von einer Anfangsmittelwertbildungszeit schrittweise auf die maximale Mittelwertbildungszeit erhöht, solange keine Unterbrechung der Mittelwertbildung erfolgt. Hierbei werden fortschreitend Mittelwerte gebildet.

Die maximale Mittelwertbildungszeit wurde bei dem hier gewählten Ausführungsbeispiel beispielhaft auf etwa 2 Minuten festgelegt. Bei anderen Ausführungsbeispielen können die gewählten Zeiten auch größer oder kleiner sein.

Steht das Fahrzeug und liegt eine Beladungsänderung vor, dann wird die Mittelwertbildungszeit, um eine möglichst schnelle Ausregelung der Lageänderung der Karosserie zu gewährleisten, auf eine Startmittelwertbildungszeit zurückgesetzt, mit der die Mittelwertbildung auch nach jeder Initialisierung der Leuchtweitenregelung beginnt.

Um eine praxisgerechte Regelung der Leuchtweite zu erreichen, wurde die Startmittelwertbildungszeit bei diesem Ausführungsbeispiel auf beispielhaft etwa 30 Sekunden festgesetzt. Bei anderen Ausführungsbeispielen kann diese Zeit auch kleiner oder größer gewählt werden.

### Bezugszeichenliste

- A1, A2, A3: Analog/Digital-Wandler
- B: Beschleunigungssignalbildner
- D: Digital/Analog-Wandler
- F: Filter
- G: Geschwindigkeitssignalbildner
- H: Hinterachsgeber (Lagegeber)
- L: Lichtsignalgeber
- S: Sollwertbildner
- S1: erste Schalteinrichtung
- S2: zweite Schalteinrichtung
- S3: dritte Schalteinrichtung
- SP: Speicher
- ST: Stelleinrichtung
- SW1: erster Schwellwertgeber
- SW2: zweiter Schwellwertgeber
- T: Tachogenerator
- V: Vorderachsgeber (Lagegeber)

## Patentansprüche

1. Leuchtweitenregler für Kraftfahrzeuge, mit mindestens einem Lagegeber (H, V), der Ausgangssignale in Abhängigkeit von der Lage der Fahrzeugkarosserie zu der Straße bildet, mit einem Sollwertbildner (S), der Sollwerte in Abhängigkeit der Ausgangssignale des mindestens einen Lagegebers (H, V), mit einem Filter (F), der eine Mittelwertbildung der Sollwerte durchführt, mit mindestens einer Stelleinrichtung (ST), die in Abhängigkeit von den gefilterten Sollwerten die Einstellung der Leuchtweite regelt, mit einem Geschwindigkeitssignalbildner (G), der Geschwindigkeitssignale des Kraftfahrzeugs bildet und mit einem Beschleunigungssignalbildner (B) verbunden ist, der Beschleunigungssignale bildet und der mit dem Filter (F) verbunden ist, dadurch gekennzeichnet, daß der Beschleunigungssignalbildner (B) mit einem ersten Schwellwertgeber (SW1) verbunden ist, der bei überschreiten und Unterschreiten eines vorgegebenen Beschleunigungswertes Signale erzeugt, daß der erste Schwellwertgeber (SW1) mit dem Filter (F), einer ersten Schalteinrichtung (S1) in der Verbindung zwischen dem Sollwertgeber (S) und dem Filter (F) und mit einer zweiten Schalteinrichtung (S2) in der Verbindung zwischen dem Filter (F) und der Stelleinrichtung (ST) verbunden ist, daß das Signal von dem ersten Schwellwertschalter (SW1) bei überschreiten des vorgegebenen Beschleunigungswertes die erste und die zweite Schalteinrichtung (S1, S2) in den geöffneten Zustand schaltet und die Mittelwertbildung durch den Filter (F) unterbricht, daß das Signal von dem ersten Schwellwertgeber (SW1) bei Unterschreiten des vorgegebenen Beschleunigungswertes die erste und die zweite Schalteinrichtung (S1, S2) in den geschlossenen Zustand schaltet und die Mittelwertbildung durch den Filter (F) einschaltet, daß der Geschwindigkeitssignalbildner (G) mit einem zweiten Schwellwertgeber (SW2) verbunden ist, der bei überschreiten und Unterschreiten einer Mindestgeschwindigkeit Signale erzeugt, daß der zweite Schwellwertgeber (SW2) einer dritten Schalteinrichtung (S3) in Verbindung zwischen dem Beschleunigungssignalgeber (B) und dem ersten Schwellwertgeber (SW1) verbunden ist, daß bei überschreiten der Mindestgeschwindigkeit die dritte Schalteinrichtung (S3) durch das Signal von dem zweiten Schwellwertgeber (SW2) in den geschlossenen Zustand geschaltet wird, daß das Signal von dem zweiten Schwellwertgeber (SW2) bei Unterschreiten der Mindestgeschwindigkeit die dritte Schalteinrichtung (S3) in den geöffneten Zustand schaltet und die Mittelwertbildung durch den Filter (F) fortgesetzt oder eingeschaltet wird.

2. Leuchtweitenregler nach Anspruch 1, dadurch gekennzeichnet, daß in der Verbindung zwischen der zweiten Schalteinrichtung (S2) und der mindestens einen Stelleinrichtung (ST) ein Speicher (SP) angeordnet ist.

3. Leuchtweitenregler nach Anspruch 2, dadurch gekennzeichnet, daß ein Lichtsignalgeber (L) mit der zweiten Schalteinrichtung (S2) verbunden ist, der ein Signal erzeugt, das bei ausgeschaltetem Licht des Kraftfahrzeugs die zweite Schalteinrichtung (S2) in den geöffneten Zustand schaltet und das bei eingeschaltetem Licht die zweite Schalteinrichtung (S2) in den geschlossenen Zustand schaltet.

4. Leuchtweitenregler nach Anspruch 3, dadurch gekennzeichnet, daß das Signal von dem Lichtsignalgeber (L) zur Umschaltung der zweiten Schalteinrichtung (S2) das Signal von dem ersten Schwellwertgeber (SW1) überschreibt.

5. Leuchtweitenregler nach mindestens einem der vorstehenden Ansprüche, dadurch gekennzeichnet, daß nach Aktivierung der Mittelwertbildung des Filters (F) durch die Signale von dem ersten Schwellwertgeber (SW1) die Mittelwertbildungszeit schrittweise oder kontinuierlich auf eine maximale Mittelwertbildungszeit erhöht wird.

6. Verfahren zur Regelung der Leuchtweite von Kraftfahrzeugen, bei dem Signale gemessen werden, die von der relativen Stellung der Fahrzeugkarosserie zu der Straße abhängen, bei dem Sollwertsignale aus diesen Signalen gebildet werden, die Sollwertsignale durch eine Mittelwertbildung gefiltert werden und bei dem Stelleinrichtungen in Abhängigkeit von den gefilterten Sollwertsignalen in ihrer Lage geregelt werden, dadurch gekennzeichnet, daß die Mittelwertbildung eine veränderliche Mittelwertbildungszeit aufweist, die nach Aktivierung der Mittelwertbildung schrittweise oder kontinuierlich bis auf eine maximale Mittelwertbildungszeit verlängert wird und daß die Mittelwertbildung unterbrochen wird, wenn eine Mindestgeschwindigkeit überschritten wird, und gleichzeitig ein vorgegebener Beschleunigungswert überschritten wurde, daß die Mittelwertbildung wieder aktiviert wird, wenn der vorgegebene Beschleunigungswert oder die Mindestgeschwindigkeit unterschritten wird.

7. Verfahren nach Anspruch 6, dadurch gekennzeichnet, daß bei ausgeschaltetem Licht des Kraftfahrzeugs der letzte gefilterte Sollwert zur Ansteuerung der mindestens einen Stelleinrichtung verwendet wird.

8. Verfahren nach Anspruch 7, dadurch gekennzeichnet, daß die Mittelwertbildungszeit bei stehendem Fahrzeug und einer durch eine Beladungsänderung bedingten Lageänderung auf eine Startmittelwertbildungszeit zurückgesetzt wird.

## Claims

1. A beam range controller for motor vehicles, having at least one position transmitter (H, V) which forms output signals depending on the position of the vehicle bodywork in relation to the road, having a set value former (S) which forms set values depending on the output signals of the at least one position transmitter (H, V), having a filter (F) which effects an averaging of the set values, having at least one regulating device (ST) which adjusts the setting of the beam range depending on the filtered set values, having a speed signal former (G) which forms speed signals of the motor vehicle and which is connected to an acceleration signal former (B) which forms acceleration signals and which is connected to the filter (F), characterised in that the acceleration signal former (B) is connected to a first threshold value transmitter (SW1) which generates signals on exceeding and falling below a predetermined acceleration value, that the first threshold value transmitter (SW1) is connected to the filter (F), to a first switching device (S1) in the connection between the set value transmitter (S) and the filter (F), and to a second switching device (S2) in the connection between the filter (F) and the regulating device (ST), that on exceeding the predetermined acceleration value the signal from the first threshold value switch (SW1) switches the first and second switching devices (S1, S2) to their open state and interrupts the averaging by the filter (F), that on falling below the predetermined acceleration value the signal from the first threshold value transmitter (SW1) switches the first and second switching devices (S1, S2) to their closed state and switches on the averaging by the filter (F), that the speed signal former (G) is connected to a second threshold value transmitter (SW2) which generates signals on exceeding and falling below a minimum speed, that the second threshold value transmitter (SW2) is connected to a third switching device (S3) in the connection between the acceleration signal transmitter (B) and the first threshold value transmitter (SW1), that on exceeding the minimum speed the third switching device (S3) is switched to its closed state by the signal from the second threshold value transmitter (SW2), and that on falling below the minimum speed the signal from the second threshold value transmitter (SW2) switches the third switching device (S3) to its open state and the averaging by the filter (F) is continued or switched on.

2. A beam range controller according to claim 1, characterised in that a memory (SP) is disposed in the connection between the second switching device (S2) and the at least one regulating device (ST).

3. A beam range controller according to claim 2, characterised in that a light signal transmitter (L) is connected to the second switching device (S2), which light signal transmitter generates a signal which switches the second switching device (S2) to its open state when the light of the motor vehicle is switched off and which switches the second switching device (S2) to its closed state when the light is switched on.

4. A beam range controller according to claim 3, characterised in that the signal from the light signal transmitter (L) overwrites the signal from the first threshold value transmitter (SW1) for switching over the second switching device (S2).

5. A beam range controller according to at least one of the preceding claims, characterised in that after the activation of the averaging operation of the filter (F) by the signals from the first threshold value transmitter (SW1) the averaging time is increased stepwise or continuously to a maximum averaging time.

6. A method of controlling the beam range of motor vehicles, wherein signals are measured which depend on the position of the vehicle bodywork in relation to the road, wherein set value signals are formed from these signals and the set value signals are filtered by an averaging operation, and wherein the position of regulating devices is adjusted depending on the filtered set value signals, characterised in that the averaging operation comprises a variable averaging time which is prolonged stepwise or continuously to a maximum averaging time after the activation of the averaging operation, and that the averaging operation is interrupted when a minimum speed is exceeded and a predetermined acceleration value has been exceeded simultaneously, and that the averaging operation is re-activated on falling below the predetermined acceleration value or the minimum speed.

7. A method according to claim 6, characterised in that when the light of the motor vehicle is switched off the set value which was filtered last is used for triggering the at least one regulating device.

8. A method according to claim 7, characterised in that when the vehicle is stationary and when there is a change of position caused by a change in loading the averaging time is reset to a starting averaging time.

## Revendications

1. Organe de réglage de la portée des phares pour les véhicules à moteur, comportant au moins un émetteur de position (H, V), qui forme des signaux de sortie en fonction de la position de la carrosserie du véhicule par rapport à la chaussée, comportant un organe (S) de formation de la valeur de consigne qui forme des valeurs de consigne en fonction des signaux de sortie de l'émetteur de position (H, V), dont il y a au moins un, comportant un filtre (F) qui procède à une formation de la valeur moyenne des valeurs de consigne, comportant au moins un dispositif réglant ST) qui règle la valeur de la portée des phares en fonction des valeurs de consigne fournies par le filtre, comportant un organe (G) de formation du signal de vitesse qui forme des signaux de vitesse du véhicule à moteur et qui est lié à un organe (B) de formation du signal d'accélération qui forme des signaux d'accélération et qui est lié au filtre (F) caractérisé par le fait que l'organe B de formation du signal d'accélération est relié à un premier émetteur (SW1) de valeur de seuil qui, en cas de dépassement, par valeur supérieure et par valeur inférieure, d'une valeur d'accélération prescrite, produit des signaux, que le premier émetteur (SW1) de valeur de seuil est relié au filtre (F), à un premier dispositif de commutation (F1) situé dans la liaison entre l'émetteur (S) de valeur de consigne et le filtre (F) et à un second dispositif de commutation (S2) placé dans la liaison entre le filtre (F) et le dispositif réglant (ST), que le signal produit par le premier émetteur (SW1) de valeur de seuil, en cas de dépassement, par valeur supérieure, de la valeur d'accélération prescrite, commute le premier et le second dispositifs de commutation (S1, S2) dans l'état ouvert et interrompt la formation de valeur moyenne par le filtre (F), que le signal produit par le premier émetteur (SW1) de valeur de seuil, en cas de dépassement, par valeur inférieure, de la valeur d'accélération prescrite, commute le premier et le second dispositifs de commutation (S1, S2) dans l'état fermé et met en marche la formation de valeur moyenne par le filtre (F), que l'organe (G) de formation du signal de vitesse est relié à un second émetteur (SW2) de valeur de seuil qui, en cas de dépassement, par valeur supérieure et par valeur inférieure, d'une vitesse minimale, produit des signaux, que le second émetteur (SW2) de valeur de seuil est relié à un troisième dispositif de commutation (S3) situé dans la liaison entre l'émetteur (B) du signal d'accélération et le premier émetteur (SW1) de valeur de seuil, qu'en cas de dépassement, par valeur supérieure, de la vitesse minimale, le troisième dispositif de commutation (S3) est commuté dans l'état fermé par le signal produit par le second émetteur (SW2) de valeur de seuil, que le signal produit par le second émetteur (SW2) de valeur de seuil, en cas de dépassement, par valeur inférieure, de la vitesse minimale, commute dans l'état ouvert le troisième dispositif de commutation (S3) et que la formation de la valeur moyenne par le filtre (F) est poursuivie ou mise en marche.

2. Organe de réglage de la portée des phares selon la revendication 1, caractérisé par le fait qu'une mémoire (ST) est disposée dans la liaison entre le second dispositif de commutation (S2) et le dispositif réglant, dont il y a au moins un (ST).

3. Organe de réglage de la portée des phares selon la revendication 2, caractérisé par le fait qu'au second dispositif de commutation (S2) est relié un émetteur (L) de signal d'éclairage qui produit un signal qui, lorsque les phares du véhicule à moteur sont éteints, commute le second dispositif de commutation (S2) dans l'état ouvert et qui, lorsque les phares sont allumés, commute le second dispositif de commutation (S2) dans l'état fermé.

4. Organe de réglage de la portée des phares selon la revendication 3, caractérisé par le fait que le signal émis par l'émetteur (L) de signal d'éclairage pour faire commuter le second dispositif de commutation (S2) efface et remplace le signal émis par le premier émetteur de valeur de seuil (SW1).

5. Organe de réglage de la portée des phares selon au moins l'une des revendications précédentes, caractérisé par le fait qu'après activation de la formation de la valeur moyenne du filtre S par les signaux émis par le premier émetteur de valeur de seuil (W1), la durée de la formation de la moyenne s'élève pas à pas ou en continu jusqu'à une durée maximale de la formation de la valeur moyenne.

6. Procédé de réglage de la portée des phares de véhicules à moteur, dans lequel sont mesurés des signaux qui dépendent de la position relative de la carrosserie du véhicule par rapport à la chaussée, dans lequel, à partir de ces signaux, sont formés des signaux de valeur de consigne qui sont filtrés par une formation de valeur moyenne et dans lequel la position de dispositifs réglants est réglée en fonction des signaux de valeur de consigne, fournis par le filtre, caractérisé par le fait que la formation de la valeur moyenne présente une durée variable qui, après activation de la formation de la valeur moyenne, augmente pas à pas ou en continu jusqu'à une durée maximale de formation de la valeur moyenne, et que la formation de la valeur moyenne s'interrompt lorsqu'une vitesse minimale est dépassée par valeur supérieure et que simultanément une valeur d'accélération prescrite a été dépassée par valeur supérieure, et que la formation de la valeur moyenne est à nouveau activée lorsque la valeur d'accélération prescrite ou la vitesse minimale sont dépassées par valeur inférieure.

7. Procédé selon la revendication 5, caractérisé par le fait que lorsque les phares du véhicule à moteur sont éteints, c'est la dernière valeur de consigne fournie par le filtre que l'on emploie pour commander le dispositif réglant, dont il y a au moins un.

8. Procédé selon la revendication 7, caractérisé par le fait que, si le véhicule est arrêté et qu'une modification de position s'impose par suite d'une modification du chargement, la durée de formation de la valeur moyenne revient à une durée initiale de formation de la valeur moyenne.
